# EUROPEAN PATENT APPLICATION

(11) **EP 4 804 069 A1**
(43) Date of publication of application: **09.09.2026**
(21) Application number: 26162452.2
(22) Date of filing: 04.03.2026
(51) Int. Cl.: G06F 21/79, G06F 12/14, G06F 21/85

(54) **ACCESS CIRCUITS PROVIDING SECURE ACCESS TO MEMORY CIRCUITS IN SYSTEM ON CHIP (SOC) COMPONENTS AND RELATED METHODS**

(30) Priority: 05.03.2025 US 202519071392
(71) Applicant: Microsoft Technology Licensing, LLC, Redmond, WA 98052 (US)
(72) Inventor: RAVI, Venkata Ravichandra, Redmond, 98052 (US); BASNIGHT, Thomas, Redmond, 98052 (US); CARD, Cameron, Redmond, 98052 (US); VAZQUEZ GARCIA, Gerardo Valente, Redmond, 98052 (US)
(74) Representative: CMS Cameron McKenna Nabarro Olswang LLP

(57) **Abstract**

Components in a system-on-chip (SOC) may communicate through a mesh interconnect. Such components include processing circuits that may initiate memory transactions and memory circuits that may be access but memory transactions. The SOC also includes access circuits to control memory transactions directed to memory circuits through their component interfaces. The access circuits may receive memory transactions and generate indications of whether a processing circuit that initiated the memory transaction has authority to access a region of memory in the memory circuit according to the memory transaction. In some examples, execution of memory transactions may proceed according to the generated indications. In some examples, a desired access (e.g., reading, writing, executing) to a targeted memory address may be indicated by an instruction in the memory transaction.

## Description

### Field of the Disclosure

The technology of the disclosure relates, in general, to data security in a system-on-chip (SOC) and more particularly to circuits for ensuring secure memory transactions in an SOC.

### Background

A system-on-chip (SOC) integrated circuit (IC) includes various components, such as general processing circuits, specialized processing circuits (e.g., accelerators, graphics, etc.), and memory circuits, which communicate through a mesh interconnect. Some memory circuits, such as cache memories, may be provided for buffering data transferred through the mesh interconnect, while other memory circuits are coupled directly to or are internal to components for dedicated purposes. The processing circuits may access the memory circuits by way of memory transactions through the mesh interconnect but at least some of the data needs to be protected from unauthorized access. Confidential user data, component configuration data, and executable instructions, for example, should be protected. Thus, some measure of security is needed for transferring data by way of the memory transactions. However, there are challenges to incorporating data security in the design of an SOC. Options for implementing such security may have a performance impact and/or may increase both the cost and the complexity of the SOC.

### Summary

Exemplary aspects disclosed herein include access circuits providing secure access to memory circuits in systems-on-chip (SOC) components. Related methods of providing secure access to memory circuits in SOC components are also disclosed. Components in an SOC may communicate through a mesh interconnect. Such components include processing circuits that may initiate memory transactions and memory circuits that may be access but memory transactions. In an exemplary aspect, the SOC also includes access circuits to control memory transactions directed to memory circuits through their component interfaces. The access circuits may receive memory transactions and generate indications of whether a processing circuit that initiated the memory transaction has authority to access a region of memory in the memory circuit according to the memory transaction. In some examples, execution of memory transactions may proceed according to the generated indications. In some examples, a desired access (e.g., reading, writing, executing) to a targeted memory address may be indicated by an instruction in the memory transaction.

In one exemplary aspect, an SOC disclosed. The SOC includes a plurality of processing circuits coupled to a mesh interconnect, a first component including a first memory circuit and coupled to the mesh interconnect, and a first access circuit corresponding to the first component. The first access circuit is configured to receive a memory transaction to access the first memory circuit of the first component, determine that a first processing circuit of the plurality of processing circuits initiated the memory transaction, determine whether the first processing circuit is authorized to perform the memory transaction, and generate an authorization indication to indicate whether the first processing circuit is authorized to perform the memory transaction.

In another exemplary aspect, a method in a SOC including a plurality of processing circuits coupled to a mesh interconnect disclosed. The method includes, in a first access circuit, receiving, from the plurality of processing circuits, a memory transaction to access a first memory circuit of a first component coupled to the mesh interconnect; determining that a first processing circuit of the plurality of processing circuits initiated the memory transaction; determining whether the first processing circuit is authorized to perform the memory transaction; and generating an authorization indication to indicate whether the first processing circuit is authorized to perform the memory transaction.

### Brief Description of the Drawing Figures

The accompanying drawing figures incorporated in and forming a part of this specification illustrate several aspects of the disclosure and, together with the description, serve to explain the principles of the disclosure.
Figure 1 is a schematic diagram of a system-on-chip (SOC) with components coupled to a mesh interconnect and corresponding access circuits provided on component interfaces to control access by memory transactions to regions of memory;
Figure 2 is a schematic diagram of an access circuit employed in the SOC of Figure 1 and coupled to a component interface to determine whether an initiator of a memory transaction has authority to execute the memory transaction in the addressed region of memory of a corresponding component;
Figure 3 is a map of initiator vectors employed in the access circuit in Figure 2 to reduce the time to decode an identifier of a memory transaction initiator and generate an indication of whether the initiator has permissions to access a region of memory;
Figure 4 is a flowchart of a method for controlling access of memory instructions to regions of a memory accessible through a component interface in the SOC in Figure 1; and
Figure 5 is a block diagram of an exemplary processor-based system on an SOC that comprises components coupled on a mesh interconnect and access circuits provided on component interfaces to control access to memory circuits.

### Detailed Description

With reference to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Exemplary aspects disclosed herein include access circuits providing secure access to memory circuits in systems-on-chip (SOC) components. Related methods of providing secure access to memory circuits in SOC components are also disclosed. Components in an SOC may communicate through a mesh interconnect. Such components include processing circuits that may initiate memory transactions and memory circuits that may be access but memory transactions. In an exemplary aspect, the SOC also includes access circuits to control memory transactions directed to memory circuits through their component interfaces. The access circuits may receive memory transactions and generate indications of whether a processing circuit that initiated the memory transaction has authority to access a region of memory in the memory circuit according to the memory transaction. In some examples, execution of memory transactions may proceed according to the generated indications. In some examples, a desired access (e.g., reading, writing, executing) to a targeted memory address may be indicated by an instruction in the memory transaction.

SOC integrated circuits (ICs) are becoming increasingly more complex, including circuits and methods for increased protection against malicious attacks. Such attacks include attempts to obtain and/or modify data as it is transferred into and out of an SOC or as it is transferred between components internal to the SOC. These attacks are often focused at component interfaces. Hardware circuits used to protect against memory attacks may be less vulnerable than software, which may be modified or manipulated, but there are also challenges to using hardware. In one aspect, even the hardware circuits used for data security may depend on configuration registers, physical address space designations, and encryption keys, for example, which are programmable by software/firmware. In another aspect, the addition of hardware circuits can increase propagation delays, which reduces performance of high-speed circuits. Additionally, adding hardware circuits that are customized to each component interface can increase manufacturing time and costs and require a longer time to implement fixes than their software counterparts. A hardware circuit that is agnostic to component interfaces can be widely utilized in an SOC, which keeps configuration complexity to a minimum. Optimization of such hardware circuits can also minimize performance impact.

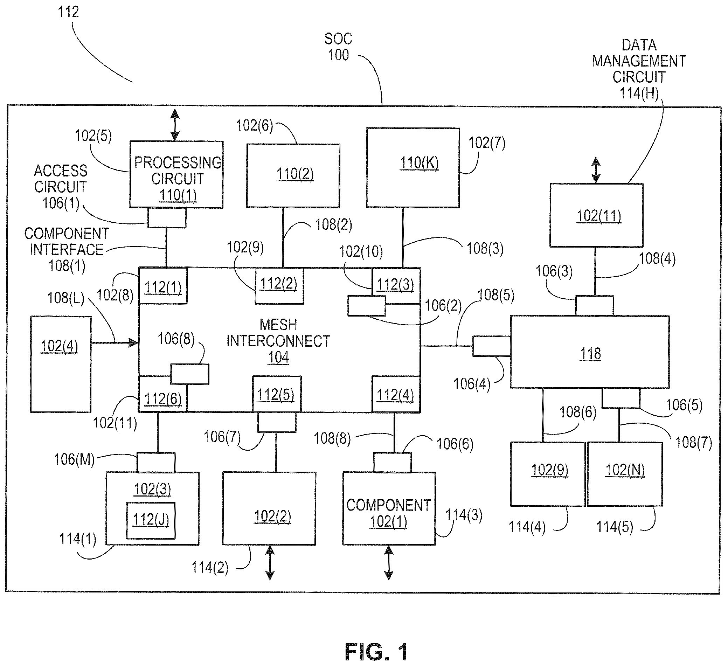

In this regard, Figure 1 is a schematic diagram of an exemplary SOC 100 that includes various components 102(1)-102(N) coupled to a mesh interconnect 104 and also includes access circuits 106(1)-106(M) provided on at least some of component interfaces 108(1)-108(L) to control memory transactions based on permission information associated with the initiators of the memory transactions. The components 102(1)-102(N) may include a plurality of processing circuits 110(1)-110(K) coupled to the mesh interconnect 104. The processing circuits 110(1)-110(K) may modify or generate data and instructions based on software-controlled instructions, algorithms, or processes, for example.

The components 102(1)-102(N) also include memory circuits 112(1)-112(J) and data management circuits 114(1)-114(H). That is, the components 102(1)-102(N) may be memory circuits 112(1)-112(J) or may contain, comprise, or control memory circuits 112(1)-112(J). Memory circuits 112(1)-112(J) store data that may be processed by the processing circuits 110(1)-110(K). The memory circuits 112(1)-112(J) may also store instructions or programs that may be executed by the processing circuits 110(1)-110(K). The memory circuits 112(1)-112(6) in this example may be cache memories that are employed to buffer data (or instructions) that is transferred through the mesh interconnect 104. Memory circuits 112(1)-112(J) may also be internal to other components 102(1)-102(N). Configuration registers (not shown) are an example of the memory circuits 112(1)-112(J) which may store configuration information that controls functionality of one or more of the components 102(1)-102(N).

The data management circuits 114(1)-114(H) may transfer data into and out of the memory circuits 112(1)-112(J), transfer data to and from the processing circuits 110(1)-110(K), and/or transmit and receive data over internal component interfaces and external interfaces of the SOC 100. In this regard, the data management circuits 114(1)-114(H) may include memory controllers, such as the data management circuits 114(2) and 114(3), coupled to external memory, nodes of the mesh network, bridges, and/or debug interfaces of the SOC 100.

The SOC 100 in this example also includes a secondary interconnect (e.g., on-chip network) 118 coupled to the mesh interconnect 104 through component interface 108(5) to provide an interface between the components 102(1)-102(N) coupled to the mesh interconnect 104 and components 102(1)-102(N) coupled to the secondary interconnect 118. The secondary interconnect 118 may be one of the components 102(1)-102(N) and, specifically, may be one of the data management circuits 114(1)-114(H). The components 102(1)-102(N) coupled to the secondary interconnect 118 may include, for example, data management circuits 114(1)-114(H) including direct memory access (DMA) controllers and peripheral interface controllers. The components 102(1)-102(N) coupled to the secondary interconnect 118 may also include a secure processor.

Notably, the SOC 100 includes the exemplary access circuits 106(1)-106(M) located at various ones of the component interfaces 108(1)-108(L). The access circuits 106(1)-106(M) determine whether the one of the processing circuits 110(1)-110(K) that initiated a memory transaction (referred to herein as an initiator) has authority or permission to execute the memory transaction that accesses a target address region. The target of a memory transaction may be a region of memory in one of the memory circuits 112(1)-112(J), which may be internal to or controlled by one of the components 102(1)-102(N).

In some examples, the component interfaces 108(1)-108(L) may be coupled between the mesh interconnect 104 and a corresponding one of the access circuits 106(1)-106(M). In some examples, one of the component interfaces 108(1)-108(L) may be coupled between one of the access circuits 106(1)-106(M) and a corresponding one of the components 102(1)-102(N). In the case of the components 102(1)-102(N) that are memory circuits 112(1)-112(J) being used as caches for buffering data through the mesh interconnect 104, the access circuits 106(1)-106(M) may be directly coupled to the mesh interconnect 104 and directly coupled to the components 102(1)-102(N).

The access circuit 106(4) in this example is coupled to the component interface 108(5) to control memory transactions between the mesh interconnect 104 and the secondary interconnect 118. The component interfaces 108(4), 108(6), and 108(7) coupled to the secondary interconnect 118 may also be coupled to one of the access circuits 106(1)-106(M). As above, the access circuits 106(1)-106(M) may be disposed between the component interfaces 108(1)-108(L) and the secondary interconnect 118 or between the component interfaces 108(1)-108(L) and the components 102(1)-102(N).

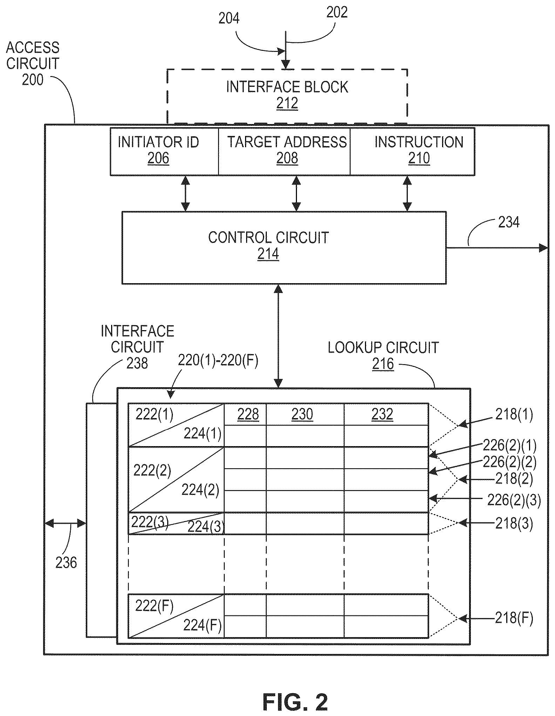

In the SOC 100, a memory transaction initiated in one of the processing circuits 110(1)-110(K) may be directed to any of the components 102(1)-102(N) that are (e.g., consist of) memory circuits 112(1)-112(J) or any of the components 102(1)-102(N) that include (e.g., comprise) memory circuits 112(1)-112(J) to access a region of memory therein. The memory may be accessed to read data/instructions, write data/instructions, read and modify data/instructions, and/or execute instructions stored therein. A more detailed discussion of a memory transaction in the SOC 100 is provided with reference to Figure 2.

Figure 2 is a schematic diagram of an access circuit 200 that may be one of the access circuits 106(1)-106(M) in the SOC 100 of Figure 1. The access circuit 200 may be coupled to a component interface 202 to receive a memory transaction 204 directed to a component, such as the components 102(1)-102(N) in Figure 1. The access circuit 200 may determine whether an initiator identifier (ID) 206, which identifies the initiator of the memory transaction 204 (e.g., a processing circuit), is authorized to access a region of memory including a target memory address 208 of a memory circuit of the component coupled to the component interface 202, as described with reference to Figure 1. The access circuit 200 may determine whether access to the region of memory, as indicated by the memory transaction 204, is authorized based on access information associated with the initiator ID 206. Authorization may depend on a type of the memory transaction 204, which may be a read from memory, a write to memory, execution of an instruction in memory, or any other transaction that accesses a region of memory including (e.g., starting at) the target memory address 208, which is the target of the memory transaction 204.

The component interface 202 may be any appropriate on-chip interface that employs a coherent or non-coherent packet-transfer protocol relying on credit handshakes, valid/ready signals, valid/grant signals, or any packet-based transfer mechanism. The access circuit 200 may be placed at either end of the component interface 202, or within a mesh interconnect, network-on-chip (NOC), protocol bridge, memory controller and/or subsystem interface. The component interface 202 may also be coupled to the corresponding component. Certain elements of a memory transaction 204 are agnostic to the configuration of the access circuit 200 or the protocol of the component interface 202. These elements may include the initiator ID 206 (e.g., source ID) of the memory transaction 204, the target memory address ("target address") 208 of the data to be accessed, and an instruction 210 indicating an action, type of memory access, or operation requested by the initiator.

An interface block 212 adapted to the particular protocol of the component interface 202 may be provided with each access circuit 200 to capture the agnostic elements of the memory transaction 204 and provide them to the access circuit 200. In Figure 2, the interface block 212 is located externally to the access circuit 200 but the access circuit is not limited in this regard and the interface block 212 may be included inside the access circuit 200. The interface block 212 is coupled to the component interface 202 to receive the memory transaction 204, which may be transferred in a packet or packets over the component interface 202 in one or more clock cycles. The interface block 212 provides the initiator ID 206, target memory address 208, and instruction 210 to the access circuit 200. In the description below, the term "initiator ID 206" may be used to refer to the "initiator identifier 206" and access information associated with the initiator ID 206 may refer to access information attributed to a processing circuit identified by the initiator ID 206.

In this regard, the access circuit 200 includes a control circuit 214 that receives the target memory address 208 of a memory transaction 204 and determines whether the target memory address 208 is in a range of memory addresses stored in the component corresponding to the access circuit 200. In this regard, the access circuit 200 includes a lookup circuit 216 to store access information 218(1)-218(F) for each region 220(1)-220(F) of memory stored in the corresponding memory circuit. The access information 218(1) of region 220(1), as an example, includes a region starting address 222(1) and a region size 224(1), where the region size 224(1) may indicate a number of chunks or blocks of memory space and the size of the chunks is known (e.g., 1K, 2K, 4K, or 8K). From the region starting address 222(1) and the region size 224(1), it can be determined whether the target memory address 208 is in a range of memory addresses of the region 220(1). From the region starting addresses 222(2)-220(F) and the region sizes 224(2)-224(F), it can be determined whether the target memory address 208 is in any of the regions 220(2)-220(F) in a memory circuit.

When the target memory address 208 is not within a range of memory addresses of any of the regions 220(1)-220(F) of the memory circuit associated with the access circuit 200, as indicated by the region starting addresses 222(1)-222(F) and the region sizes 224(1)-224(F), the memory transaction 204 may simply be ignored. Alternatively, a mismatch between the target memory address 208 and the regions 220(1)-220(F) may indicate an error or a malicious attempt to access the regions 220(1)-220(F) without authorization. Thus, in response to such memory transaction 204, the access circuit 200 may generate a response indicating failure of the memory transaction 204, an error indication, or an indication of a possible attack on the memory, depending on design choices. When the target memory address 208 is located within one of the regions 220(1)-220(F) identified in the access information 218(1)-218(F), the control circuit 214 may generate an indication that the target memory address 208 is located within one of the regions 220(1)-220(F), and may indicate which of the regions 220(1)-220(F) includes the target memory address 208.

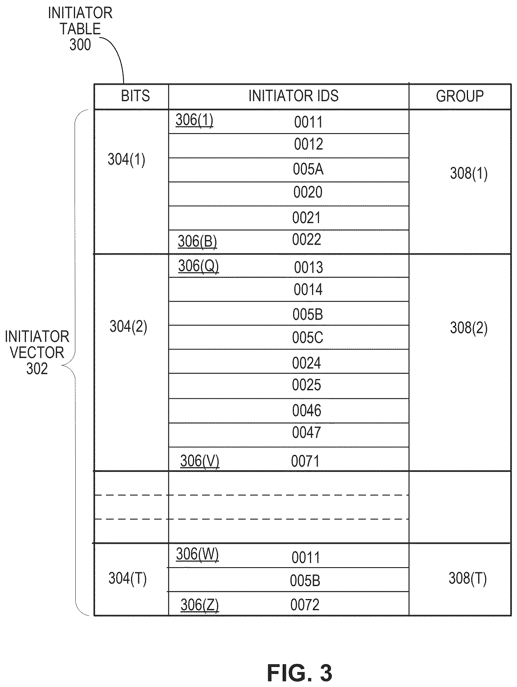

The access information 218(1)-218(F) is provided for the regions 220(1)-220(F), where each of the regions 220(1)-220(F) has a number "S" of authorization sets ("sets") 226(1)(1)-226(F)(S), where "S" may be a different number for each of the regions 220(1)-220(F). As an example, the lookup circuit 216 includes access information 218(1)-218(3) and 218(F) for regions 220(1)-220(3) and 220(F). In Figure 2, the access information 218(1) includes two sets 226(1)(1) and 226(1)(2) (i.e., S=2), the access information 218(2) includes three sets 226(2)(1)-226(2)(3) (i.e., S=3), and the access information 218(3) includes one set 226(3)(1) (i.e., S=1), etc. Referring to the access information 218(2), as an example, each of the sets 226(2)(1)-226(2)(3) includes a set identifier 228, set permissions 230, and a set initiator vector 232 ("initiator vector 232"). The set permissions 230 includes a combination of authorizations for accessing the corresponding one of the memory regions 220(1)-220(F) by any initiator ID 206 identified by the set initiator vector 232. A combination of authorizations (also referred to herein as permissions) in this context refers to an indication of authorization or no authorization for each of (e.g., the types of) the instructions 210, which may be read, write, execute or any other type of memory access transaction. An example of the set initiator vector 232 is explained in further detail with reference to Figure 3 below.

The access information 218(1)-218(F) is also provided for the processing circuits 110(1)-110(K) in Figure 1. The set initiator vectors 232 identify one or more of the processing circuits 110(1)-110(K) having the particular combination of permissions or authorizations specified in the set permissions 230 in a corresponding one of the sets 226(1)(1)-226(F)(S). Multiple processing circuits having a same set of permissions may be identified by the set initiator vector 232 for a set. The set initiator vector 232 indicates whether an initiator of a memory transaction 204 will be allowed to or prevented from accessing the target memory address 208 in the manner associated with the instruction 210.

In an example of operation of the access circuit 200, in response to receiving the memory transaction 204, the control circuit 214 may employ the lookup circuit 216 to access (e.g., simultaneously or nearly simultaneously) the region starting addresses 222(1)-222(F), the region sizes 224(1)-224(F), and the sets 226(1)(1)-226(F)(S) of all the regions 220(1)-220(F). An objective of the control circuit 214 in this situation is to determine, as quickly as possible, whether the memory transaction 204 is directed to one of the regions 220(1)-220(F) in the corresponding memory and whether the initiator of the memory transaction has been granted permission to execute the instruction 210 at the target memory address 208. To minimize the time it takes to achieve such objective, the control circuit 214 may examine the region starting addresses 222(1)-222(F), the region sizes 224(1)-224(F), the set permissions 230, and the set initiator vectors 232 for (e.g., all of) the sets 226(1)(1)-226(F)(S) of the regions 220(1)-220(F) in parallel. In one action, the first access circuit 200 determines, based on the initiator identifier 206 in the memory transaction 204, whether the first processing circuit is authorized to perform the memory transaction 204 in the first memory circuit. First, the control circuit 214 obtains access information 218(1)-218(F) for the first memory circuit from the lookup circuit 216. The control circuit 214 determines whether the target memory address 208 is located in any of the regions 220(1)-220(F). In a second action, which may be in parallel to the first action, the control circuit 214 compares the instruction 210 to the set permissions 230 of all the sets 226(1)(1)-226(F)(S) to determine whether any of the sets 226(1)(1)-226(F)(S) includes the permissions to execute the memory transaction 204, based on the instruction 210. In a third action, which may be performed in parallel to one or both of the first and second actions, the control circuit 214 compares the initiator ID 206 to the set initiator vectors 232 to determine whether the initiator indicated by the initiator ID 206 is included among the processing circuits having the set permissions 230 of any of the sets 226(1)(1)-226(F)(S).

Results of the above actions are merged to determine whether the target memory address 208 is found in one region 220(X) of the regions 220(1)-220(F) and whether the set permission 230 and the set initiator vector 232 for a same set in that region indicate that the initiator of the memory transaction 204 is authorized to perform the memory transaction 204 in that region. For example, if the target memory address 208 is located in the region 220(2), the set permissions 230 for set 226(2(1) authorize the instruction 210, and the initiator ID is one of the processing circuits indicated by the set initiator vector 232 for set 226(2)(1), the control circuit 214 may determine that the memory transaction 204 is authorized and may generate that authorization indication to indicate that the initiator is authorized to perform the memory transaction.

On the other hand, if the results of the above actions fail to indicate that both the set permissions 230 and the set initiator vector 232, in a same set of a region that includes the target memory address 208, correspond to the instruction 210 and the initiator ID 206, the control circuit 214 may not generate the authorization indication. Even if the set initiator vector 232 of one of the sets 226(1)(1)-226(F)(S) in one of the regions 220(1)-220(F) indicates that the initiator ID 206 has authority of that set to generate the authorization indication, the control circuit 214 must also determine that the set permissions 230 of that set indicate the specific type(s) of authority for the instruction 210 and the set is in a region 220(1)-220(F) in which the target memory address 208 is located.

In other words, with additional reference back to Figure 1, after an access circuit 106(X1) (of the access circuits 106(1)-106(M)), for example, receives a memory transaction 204 to access a memory circuit 112(X2) (of the memory circuits 112(1)-112(J)) of a component 102(X3) (of the components 102(1)-102(N)), the access circuit 106(X1) determines that a processing circuit 110(X4) (of the processing circuits 110(1)-110(K)) initiated the memory transaction 204, determines whether the processing circuit 110(X4) is authorized to perform the memory transaction 204, and generates an authorization indication 234 to indicate whether the processing circuit 110(X4) is authorized to perform the memory transaction 204. Similar procedures are employed for all types of memory access instructions 210. As noted above, the component interface 202 may be coupled to the component itself, to receive the initiator ID 206, the target memory address 208, and the instruction 210. Additionally, the component receives the authorization indication 234 to indicate whether the memory transaction should be executed (e.g., prevented from executing or allowed to execute) and the component may determine how to proceed with the memory transaction (e.g., whether to perform the memory transaction or not) based on the authorization indication 234.

In another aspect, the lookup circuit 216 is a memory circuit that must be programmed by, for example, firmware executed in a secure processing circuit or one or more other processing circuits. The lookup circuit 216 may be accessed through a programming interface 236 under the control of an interface circuit 238. A hostile attack on an SOC 100 may attempt to circumvent the protections provided by the access circuit 200 by updating the access information 218(1)-218(F) in the lookup circuit 216. However, this may be avoided by included programming protections.

In one example, the interface circuit 238 may be designed to prevent any access to any of the sets 226(1)(1)-226(F)(S) unless the region size 224(1)-224(F) of the corresponding region 220(1)-220(F) has been previously set to a particular value (e.g., zero (0)). Referring to the region 220(1), for example, any attempt to update the set identifier 228, the set permissions 230, or the set initiator vector 232 in any of the authorization sets 226(1)(1)-226(1)(3) of the region 220(1) would be prevented and may cause an error signal to be generated if the region size 224(1) is not the particular value (e.g., is non-zero). Additionally, the access circuit 200 may determine that no memory transactions 204 are authorized to the region 220(1) if the region size 224(1) equals zero. That is the access circuit 200 may generate the authorization indication 234 to indicate a processing circuit is not authorized to perform the memory transaction to a region 220(1), for example, in response to the region size 224(1) indicating the size (e.g., number of chunks) is zero. Stated differently, if the region size 224(1) of the region 220(1) equals zero, memory transactions 204 to the region 220(1) are not allowed and an error may be generated.

The access information 218(1)-218(F) will be used to determine whether the target memory address 208 is in one of the regions 220(1)-220(F) based on any non-zero region sizes 224(1)-224(F) and to also determine whether the memory transaction 204 having the initiator ID 206 should be allowed or prevented. A sequence for updating the set 226(1)(1)-226(1)(S) may include, in the following order, programming the region size 224(1) to zero, updating the set permissions 230, set initiator vector 232, and/or the set identifier 228 for any of the sets 226(1)(1)-226(1)(S) as desired, and programming the region size 224(1) back to the appropriate non-zero number of chunks in the region 220(1). It should be understood that the previously described method for protecting against access to the lookup circuit 216 is one non-limiting example.

As noted above, the access circuit 200 is agnostic to the component interfaces 202 with which it may be used. Thus, as shown in Figure 1, an SOC 100 may include many access circuits 106(1)-106(M) to protect a variety of memory circuits. Since the memory circuits may vary with regard to the number of regions of memory in a memory circuit and the number of authorization sets in each region, the access circuit 200 may be configurable to include access information for any predetermined number F of regions 220(1)-220(F) based on the memory in the memory circuit and the access information 218(1)-218(F) may be configurable to include any number S of authorization sets 226(1)-226(S) based on the combinations of permissions for each region.

Figure 3 is an initiator table 300 for decoding bits 304(1)-304(T) of a set initiator vector 302 that may be any of the set initiator vectors 232 in the sets 226(1)(1)-226(F)(S) in the access information 218(1)-218(F) of the access circuit 200 in Figure 2. The initiator table 300 is provided to reduce the time needed for the access circuit 200 in Figure 2 to determine whether the set permissions 230 in any of the sets 226(X)(1)-226(X)(S) in a region 220(X) have been granted to an initiator ID 206 in a memory transaction 204. The set initiator vectors 302 reduce the time for making such determination by reducing a number of comparisons to the initiator ID 206.

Each of the bits 304(1)-304(T) in a set initiator vector 232 is associated with one or more initiator IDs 306(1)-306(Z) of the processing circuits 110(1)-110(K) in Figure 1. A same one of the processing circuits 110(1)-110(K) may be listed more than once among the initiator IDs 306(1)-306(Z). For example, as shown in Figure 3, each of the bits 304(1)-304(T) may be associated with one of groups 308(1)-308(T). In some examples, the groups 308(1)-308(T) correspond to subsystems, wherein a subsystem includes a plurality of the processing circuits 110(1)-110(K) that all have a same level of access authority.

Different processing circuits 110(1)-110(K) may have different access permissions to a region 220(1)-220(F) of memory, which is the reason for providing multiple sets (e.g., 1 to S) in the lookup circuit 216 for a region. In the example in Figure 3, the processing circuits 110(1)-110(K) that have the set permissions 230 associated with bit 304(1) are identified by the initiator IDs 306(1)-306(B) (0011 through 0022), which correspond to group 308(1). A different set of initiator IDs 306(Q)-306(V) (0013-0071 in group 308(2)) identify the processing circuits 110(1)-110(K) that have the set permissions 230 associated with bit 304(2). Finally, initiator IDs 306(W)-306(Z) identify the initiators corresponding to bit 304(T) of the set initiator vector 302. Where the set initiator vector 302 has twenty-four (24) bits (e.g., T=24), for example, there may be 24 uniquely identified combinations of permissions and any number of initiator IDs 206 may map to any of the bits 304(1)-304(T). In some examples, the initiator ID of a processing circuit may be included in more than one of the groups 308(1)-308(T), which would result in that processing circuit having the permissions in both corresponding set permissions 230.

On the other hand, a single one of the processing circuits 110(1)-110(K) may have different permissions in different regions 220(1)-220(F) of the memory circuit. Thus, the initiator ID of a processing circuit may be included in one of the groups 308(1)-308(T) for one of the regions 220(0)-220(F) and in a different one of the groups 308(1)-308(T) for a different one of the regions 220(0)-220(F). The initiator IDs associated with one of the bits 304(1)-304(T) (304(1) associated with group 308(1)) in a first region are not necessarily (but may be) the same as the initiator IDs associated with the same bit (e.g., 304(1)) in a second region. Similarly, the set permissions 230 associated with a particular one of the bits 304(1)-304(T) in a first region are not necessarily (but may be) the same as the set permissions 230 in the same one of the bits 304(1)-304(T) in a different region.

Returning to the example described with reference to Figure 2 of a memory transaction 204 to the region 220(2), using the initiator table 300, the control circuit 214 may determine that the initiator ID 206 in the memory transaction 204 corresponds to one of the initiator IDs for a designated bit 304(T) in the set initiator vector 232 (302) of a particular one of the sets 226(1)(1)-226(F)(S). If the set permissions 230 of the particular set authorizes the instruction 210 in the memory transaction 204 and the particular set is one of the sets of a region 220(1)-220(F) that includes the target memory address 208, the control circuit 214 will generate the authorization indication 234.

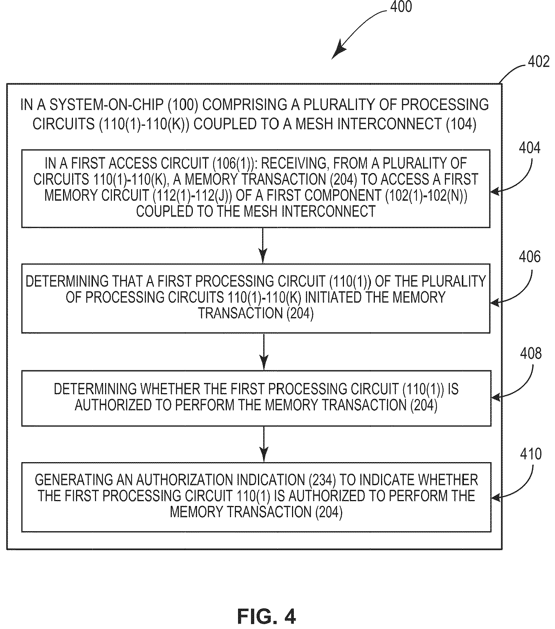

Figure 4 is a flowchart of a method 400 in a SOC 100 comprising a plurality of processing circuits 110(1)-110(K) coupled to a mesh interconnect 104 (block 402). The method includes, in a first access circuit 106(1): receiving, from a plurality of processing circuits 110(1)-110(K), a memory transaction 204 to access a first memory circuit 112(1)-112(J) of a first component 102(1)-102(N) coupled to the mesh interconnect 104 (block 404). The method 400 further includes determining that a first processing circuit 110(1) of the plurality of processing circuits 110(1)-110(K) initiated the memory transaction 204 (block 406) and determining whether the first processing circuit 110(1) is authorized to perform the memory transaction 204 (block 408). The method 400 also includes generating an authorization indication 234 to indicate whether the first processing circuit 110(1) is authorized to perform the memory transaction 204 (block 410).

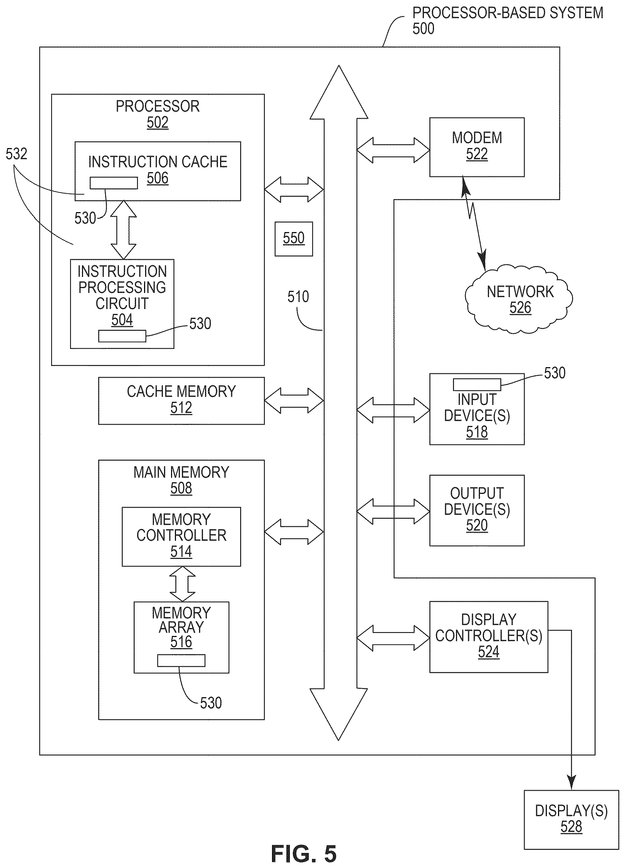

Figure 5 is a block diagram of an exemplary processor-based system 500 that includes a processor 502 (e.g., a microprocessor), including an instruction processing circuit 504. The processor-based system 500 may include integrated circuits on an electronic board or card, such as a printed circuit board (PCB), in a server, a personal computer, a desktop computer, a laptop computer, a personal digital assistant (PDA), a computing pad, a mobile device, or any other device, and may represent, for example, a server or a user's computer. In this example, the processor-based system 500 includes the processor 502. The processor 502 represents one or more general-purpose processing circuits, such as a microprocessor, central processing unit, or the like. More particularly, the processor 502 may be an EDGE instruction set microprocessor or other processor implementing an instruction set that supports explicit consumer naming for communicating produced values resulting from the execution of producer instructions.

The processor 502 is configured to execute instructions for performing the operations and steps discussed herein. In this example, the processor 502 includes an instruction cache 506 for temporary, fast access memory storage of instructions accessible by the instruction processing circuit 504. Fetched or prefetched instructions from a memory, such as a main memory 508, over a system bus 510, are stored in the instruction cache 506. Data may be stored in a cache memory 512 coupled to the system bus 510 for low-latency access by the processor 502. The instruction processing circuit 504 is configured to process instructions fetched into the instruction cache 506 and process the instructions for execution.

The processor 502 and the main memory 508 are coupled to the system bus 510 and can intercouple peripheral devices included in the processor-based system 500. As is well known, the processor 502 communicates with these other devices by exchanging address, control, and data information over the system bus 510. For example, the processor 502 can communicate bus transaction requests to a memory controller 514 in the main memory 508 as an example of a slave device. Although not illustrated in Figure 5, multiple system buses 510 could be provided, wherein each system bus 510 constitutes a different fabric. In this example, the memory controller 514 is configured to provide memory access requests to a memory array 516 in the main memory 508. The memory array 516 is comprised of an array of storage bit cells for storing data. The main memory 508 may be a read-only memory (ROM), flash memory, dynamic random-access memory (DRAM), such as synchronous DRAM (SDRAM), etc. and/or static memory (e.g., flash memory, SRAM, etc.), as non-limiting examples.

Other devices can be connected to the system bus 510. As illustrated in Figure 5, these devices can include the main memory 508, one or more input device(s) 518, one or more output device(s) 520, a modem 522, and one or more display controllers 524, as examples. The input device(s) 518 can include any type of input device, including but not limited to input keys, switches, voice processors, etc. The output device(s) 520 can include any type of output device, including but not limited to audio, video, other visual indicators, etc. The modem 522 can be any device configured to allow an exchange of data to and from a network 526. The network 526 can be any type of network, including but not limited to a wired network (e.g., ethernet) or wireless network, a private or public network, a local area network (LAN), a wireless local area network (WLAN), a wide area network (WAN), a BLUETOOTH^{™} network, and the Internet. The modem 522 can be configured to support any type of communications protocol desired. The processor 502 may also be configured to access the display controller(s) 524 over the system bus 510 to control information sent to one or more displays 528. The display(s) 528 can include any type of display, including but not limited to a cathode ray tube (CRT), a liquid crystal display (LCD), a plasma display, etc.

The system bus 510 may be the mesh interconnect 104 in Figure 1 and the processor 502, main memory 508, cache memory 512, input devices 518, output devices 520, and display controllers 524 may be examples of the components 102(1)-102(N) in Figure 1. In this regard, the access circuit 200 of Figure 2 may be employed on interfaces and respective components shown herein.

The processor-based system 500 in Figure 5 may include a set of instructions 530 to be executed by the processor 502 for any application desired according to the instructions. The instructions 530 may be stored in the main memory 508, the processor 502, and/or the instruction cache 506 as examples of a non-transitory computer-readable medium 532. The instructions 530 may also reside, completely or at least partially, within the main memory 508 and/or within the processor 502 during their execution. The instructions 530 may further be transmitted or received over the network 526 via the modem 522, such that the network 526 includes the computer-readable medium 532.

While the computer-readable medium 532 is shown in an exemplary embodiment to be a single medium, the term "computer-readable medium" should be taken to include a single medium or multiple media (e.g., a centralized or distributed database and/or associated caches and servers) that store the one or more sets of instructions. The term "computer-readable medium" shall also be taken to include any medium that is capable of storing, encoding, or carrying a set of instructions for execution by the processing device and that causes the processing device to perform any one or more of the methodologies of the embodiments disclosed herein. The term "computer-readable medium" shall accordingly be taken to include, but not be limited to, solid-state memories, optical medium, and magnetic medium.

The present disclosure is supplemented by the following Examples.

Example 1: A system-on-chip, SoC, 100, comprising: a plurality of processing circuits 110(1)-110(K) configured to initiate memory transactions 204; a memory circuit 112 comprising a plurality of memory regions 220(1)-220(F); a mesh interconnect 104 coupled to the plurality of processing circuits 110(1)-110(K) and the memory circuit 112; and an access circuit 106 coupled to the mesh interconnect 104, the access circuit 106 configured to: obtain, for a memory transaction 204 of the memory transactions 204: an initiator identifier 206 identifying a processing circuit, of the plurality of processing circuits 110(1)-110(K), that initiated the memory transaction 204, a target memory address 208, and a type, wherein the memory transaction 204 is directed to the memory circuit 112; identify a memory region 220, of the plurality of memory regions 220(1)-220(F), that includes the target memory address 208; access permission information 218 for the identified memory region 220; determine that the processing circuit is not authorized to perform the type with respect to the identified memory region 220 based on the permission information 218 for the identified memory region 220; and in response to determining that the processing circuit is not authorized to perform the type with respect to the identified memory region 220, generate an authorization indication 234 indicating that the processing circuit is not authorized to perform the memory transaction 204.

Example 2: The SoC of Example 1, wherein the access circuit is further configured to, for another memory transaction directed to the memory circuit and initiated by another processing circuit of the plurality of processing circuits: obtain, for another memory transaction of the memory transactions: another initiator identifier identifying another processing circuit, of the plurality of processing circuits, that initiated the other memory transaction, another target memory address, and another type, wherein the other memory transaction is directed to the memory circuit; identify another memory region, of the plurality of memory regions, that includes the other target memory address; access permission information for the other identified memory region; determine that the other processing circuit is authorized to perform the other type with respect to the other identified memory region based on the permission information for the other identified memory region; and in response to determining that the other processing circuit is authorized to perform the other type with respect to the other identified memory region, generate another authorization indication indicating that the other processing circuit is authorized to perform the other memory transaction.

Example 3: The SoC of Example 1 or 2, wherein the access circuit is further configured to provide the authorization indication to the memory circuit, and wherein the memory circuit is configured to prevent execution of the memory transaction in response to the authorization indication.

Example 4: The SoC of any preceding Example, further comprising: a plurality of other memory circuits coupled to the mesh interconnect; and a plurality of other access circuits, wherein each other access circuit is associated with a respective other memory circuit of the plurality of other memory circuits and is configured to control access by memory transactions directed to the respective other memory circuit.

Example 5: The SoC of any preceding Example, wherein the type of the memory transaction includes at least one of a read type, a write type, or an execute type, and wherein the access circuit is configured to determine that the processing circuit is not authorized to perform the type with respect to the identified memory region based on the permission information for the identified memory region and the type of the memory transaction.

Example 6: The SoC of any preceding Example, wherein the permission information for the identified memory region comprises set permissions and a set initiator vector, and wherein determining that the processing circuit is not authorized to perform the type with respect to the identified memory region is further based on the type with respect to the set permissions and the processing circuit with respect to the set initiator vector.

Example 7: The SoC of Example 6, wherein the set initiator vector comprises a plurality of bits associated with processing circuits of the plurality of processing circuits, and wherein determining that the processing circuit is not authorized to perform the type with respect to the identified memory region is further based on a bit of the set initiator vector associated with the processing circuit.

Example 8: The SoC of Example 7, wherein at least two processing circuits of the plurality of processing circuits are associated with a same bit of the set initiator vector.

Example 9: The SoC of any preceding Example, wherein each memory region of the plurality of memory regions is identified by a region starting address and a region size, and wherein the access circuit is configured to identify the identified memory region by comparing the target memory address to the region starting address and the region size.

Example 10: The SoC of Example 9, wherein the access circuit is configured to determine that the processing circuit is not authorized to perform the type with respect to the identified memory region in response to the region size of the identified memory region indicating zero.

Example 11: A method, comprising: obtaining, for a memory transaction 204 directed to a memory circuit 112 of a system-on-chip 100: an initiator identifier 206 identifying a processing circuit, of a plurality of processing circuits 110(1)-110(K), that initiated the memory transaction 204, a target memory address 208, and a type; identifying a memory region 220 of a plurality of memory regions 220(1)-220(F), the identified memory region 220 including the target memory address 208; accessing permission information 218 for the identified memory region 220; determining, based on the permission information 218 for the identified memory region 220, that the processing circuit is not authorized to perform the type with respect to the identified memory region 220; and in response to determining that the processing circuit is not authorized to perform the type with respect to the identified memory region 220, generating an authorization indication 234 indicating that the processing circuit is not authorized to perform the memory transaction 204.

Example 12: The method of Example 11, wherein each memory region of the plurality of memory regions is identified by a region starting address and a region size, and wherein identifying the identified memory region comprises comparing the target memory address to the region starting address and the region size.

Example 13: The method of Example 11 or 12, wherein the permission information for the identified memory region comprises set permissions and a set initiator vector, and wherein determining that the processing circuit is not authorized to perform the type with respect to the identified memory region is further based on the type with respect to the set permissions and the processing circuit with respect to the set initiator vector.

Example 14: The method of Example 13, wherein the set initiator vector comprises a plurality of bits associated with processing circuits of the plurality of processing circuits, and wherein determining that the processing circuit is not authorized to perform the type with respect to the identified memory region is further based on a bit of the set initiator vector associated with the processing circuit.

Example 15: The method of Example 14, wherein at least two processing circuits of the plurality of processing circuits are associated with a same bit of the set initiator vector.

Example 16: An access circuit 106, comprising: a control circuit 214 configured to: obtain, for a memory transaction 204 directed to a memory circuit 112 of a system-on-chip 100: an initiator identifier 206 identifying a processing circuit, of a plurality of processing circuits 110(1)-110(K), that initiated the memory transaction 204, a target memory address 208, and a type; and identify a memory region 220, of a plurality of memory regions 220(1)-220(F), the identified memory region 220 including the target memory address 208; and a lookup circuit 216 coupled to the control circuit 214, the lookup circuit 216 configured to access permission information 218 for the identified memory region 220, wherein the control circuit 214 is further configured to: determine, based on permission information 218 for the identified memory region 220, that the processing circuit is not authorized to perform the type with respect to the identified memory region 220; and in response to determining that the processing circuit is not authorized to perform the type with respect to the identified memory region 220, generate an authorization indication 234 indicating that the processing circuit is not authorized to perform the memory transaction 204.

Example 17: The access circuit of Example 16, wherein each memory region of the plurality of memory regions is identified by a region starting address and a region size, and wherein the control circuit is configured to identify the identified memory region by comparing the target memory address to the region starting address and the region size.

Example 18: The access circuit of Example 17, wherein the permission information for the identified memory region comprises set permissions and a set initiator vector, and wherein determining that the processing circuit is not authorized to perform the type with respect to the identified memory region is further based on the type with respect to the set permissions and the processing circuit with respect to the set initiator vector.

Example 19: The access circuit of Example 18, wherein the set initiator vector comprises a plurality of bits associated with processing circuits of the plurality of processing circuits, and wherein determining that the processing circuit is not authorized to perform the type with respect to the identified memory region is further based on a bit of the set initiator vector associated with the processing circuit.

Example 20: The access circuit of Example 19, wherein at least two processing circuits of the plurality of processing circuits are associated with a same bit of the set initiator vector.

The present disclosure is additionally supplemented by the following set of examples.

Example 1A: A system on chip (SOC), comprising: a plurality of processing circuits coupled to a mesh interconnect; a first component comprising a first memory circuit and coupled to the mesh interconnect; and a first access circuit corresponding to the first component and configured to: receive a memory transaction to access the first memory circuit of the first component; determine that a first processing circuit of the plurality of processing circuits initiated the memory transaction; determine whether the first processing circuit is authorized to perform the memory transaction; and generate an authorization indication to indicate whether the first processing circuit is authorized to perform the memory transaction.

Example 2A: The SOC of Example 1A, further comprising a first component interface coupled between the mesh interconnect and the first access circuit, wherein the first access circuit is coupled directly to the first component.

Example 3A: The SOC of Example 1A, further comprising a first component interface coupled between the first access circuit and the first component, wherein the first access circuit is coupled directly to the mesh interconnect.

Example 4A: The SOC of Example 1A, wherein the first access circuit is directly coupled to the mesh interconnect and directly coupled to the first component.

Example 5A: The SOC of Example 2A, further comprising: a first component interface coupled between the mesh interconnect and the first access circuit; a secondary interconnect coupled to the first access circuit; and a second access circuit coupled to the secondary interconnect, wherein the mesh interconnect is coupled to the second access circuit.

Example 6A: The SOC of Example 1A, the first access circuit comprising: a lookup circuit configured to store access information for the first memory circuit, wherein the first access circuit is further configured to determine, based on an initiator identifier in the memory transaction, whether the first processing circuit is authorized to perform the memory transaction in the first memory circuit.

Example 7A: The SOC of Example 6A, wherein: the access information for the first memory circuit comprises an initiator vector, wherein bits of the initiator vector correspond to groups of processing circuits; and each of the groups of processing circuits comprises one or more processing circuits of the plurality of processing circuits.

Example 8A: The SOC of Example 7A, wherein: the access information further comprises an initiator table to map groups of initiator identifiers of the plurality of processing circuits to the bits of the initiator vector.

Example 9A: The SOC of Example 7A, wherein: the access information for the first memory circuit comprises access information for each region of the memory in the first memory circuit; and each region of the memory is identified by a starting address and a region size.

Example 10A: The SOC of Example 9A, wherein: the access information for the plurality of processing circuits comprises at least one authorization set for each region of the memory in the first memory circuit; and each authorization set of the at least one authorization set for each region of the memory comprises permissions for access to the region.

Example 11A: The SOC of Example 10A, wherein: each authorization set of the at least one authorization set comprises permissions for one group of the groups of processing circuits to access the region of memory.

Example 12A: The SOC of Example 10A, wherein the vector comprises bits that are each associated with one or more of the plurality of processing circuits.

Example 13A: The SOC of Example 9A, wherein the first access circuit is further configured to generate the authorization indication to indicate the first processing circuit is not authorized to perform the memory transaction in response to the region size indicating zero.

Example 14A: The SOC of Example 9A, wherein the first access circuit is further configured to: update the access information for a first region of the memory in the first memory circuit in response to the memory transaction; and prevent updates to the at least one authorization set in the access information in response to the region size in the access information of the first region being non-zero.

Example 15A: A method in a system on chip (SOC) comprising a plurality of processing circuits coupled to a mesh interconnect, the method comprising: in a first access circuit: receiving, from the plurality of processing circuits, a memory transaction to access a first memory circuit of a first component coupled to the mesh interconnect; determining that a first processing circuit of the plurality of processing circuits initiated the memory transaction; determining whether the first processing circuit is authorized to perform the memory transaction; and generating an authorization indication to indicate whether the first processing circuit is authorized to perform the memory transaction.

Example 16A: The method of Example 15A, further comprising: storing, in a lookup circuit in the first access circuit, access information for the plurality of processing circuits; and determining, based on an initiator identifier in the memory transaction, whether the first processing circuit is authorized to perform the memory transaction in the first memory circuit.

Example 17A: The method of Example 15A, wherein storing the access information for the first access circuit further comprises: storing an initiator vector, wherein bits of the initiator vector correspond to groups of processing circuits; and each of the groups of processing circuits comprises one or more processing circuits of the plurality of processing circuits.

Example 18A: The method of Example 17A, wherein: storing the access information for the first access circuit further comprises storing access information for each region of the memory in the first memory circuit; and each region of the memory is identified by a starting address and a region size.

Example 19A: The method of Example 15A, wherein: storing the access information for the first access circuit further comprises storing at least one authorization set for each region of the memory in the first memory circuit; and each authorization set of the at least one authorization set for each region of the memory comprises permissions for access to the region.

Example 20A: The method of Example 17A, wherein storing each authorization set further comprises storing permissions for one group of the groups of processing circuits to access the region of memory.

The embodiments disclosed herein include various steps. The steps of the embodiments disclosed herein may be formed by hardware components or may be embodied in machine-executable instructions, which may be used to cause a general-purpose or special-purpose processor programmed with the instructions to perform the steps. Alternatively, the steps may be performed by a combination of hardware and software.

The embodiments disclosed herein may be provided as a computer program product or software that may include a machine-readable medium (or a computer-readable medium) having stored thereon instructions, which may be used to program a computer system (or other electronic devices) to perform a process according to the embodiments disclosed herein. A machine-readable medium includes any mechanism for storing or transmitting information in a form readable by a machine (e.g., a computer). For example, a machine-readable medium includes a machine-readable storage medium (e.g., ROM, random access memory ("RAM"), a magnetic disk storage medium, an optical storage medium, flash memory devices, etc.), and the like.

Unless specifically stated otherwise and as apparent from the previous discussion, it is appreciated that throughout the description, discussions utilizing terms such as "processing," "computing," "determining," "displaying," or the like refer to the action and processes of a computer system, or similar electronic computing device, that manipulates and transforms data and memories represented as physical (electronic) quantities within the computer system's registers into other data similarly represented as physical quantities within the computer system memories or registers or other such information storage, transmission, or display devices.

The algorithms and displays presented herein are not inherently related to any particular computer or other apparatus. Various systems may be used with programs in accordance with the teachings herein, or it may prove convenient to construct more specialized apparatuses to perform the required method steps. The required structure for a variety of these systems will appear from the description above. In addition, the embodiments described herein are not described with reference to any particular programming language. It will be appreciated that a variety of programming languages may be used to implement the teachings of the embodiments as described herein.

Those of skill in the art will further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends on the particular application, design choices, and/or design constraints imposed on the overall system. Skilled artisans may implement the described functionality in varying ways for each particular application, but such implementation decisions should not be interpreted as causing a departure from the scope of the present embodiments.

The various illustrative logical blocks, modules, and circuits described in connection with the embodiments disclosed herein may be implemented or performed with a processor, a Digital Signal Processor (DSP), an Application Specific Integrated Circuit (ASIC), a Field Programmable Gate Array (FPGA), or other programmable logic device, a discrete gate or transistor logic, discrete hardware components, or any combination thereof designed to perform the functions described herein. Furthermore, a controller may be a processor. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The embodiments disclosed herein may be embodied in hardware and in instructions that are stored in hardware and may reside, for example, in RAM, flash memory, ROM, Electrically Programmable ROM (EPROM), Electrically Erasable Programmable ROM (EEPROM), registers, a hard disk, a removable disk, a CD-ROM, or any other form of computer-readable medium known in the art. An exemplary storage medium is coupled to the processor such that the processor can read information from and write information to the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. Those of skill in the art will also understand that information and signals may be represented using any of a variety of technologies and techniques. For example, data, instructions, commands, information, signals, bits, symbols, and chips that may be referenced throughout the above description may be represented by voltages, currents, electromagnetic waves, magnetic fields, optical fields, or particles, or any combination thereof.

Unless otherwise expressly stated, it is in no way intended that any method set forth herein be construed as requiring that its steps be performed in a specific order. Accordingly, where a method claim does not actually recite an order to be followed by its steps, or it is not otherwise specifically stated in the claims or descriptions that the steps are to be limited to a specific order, it is in no way intended that any particular order be inferred.

It will be apparent to those skilled in the art that various modifications and variations can be made without departing from the scope of the invention. Since modifications, combinations, sub-combinations, and variations of the disclosed embodiments incorporating the substance of the invention may occur to persons skilled in the art, the invention should be construed to include everything within the scope of the appended claims and their equivalents.

## Claims

1. A system-on-chip, SoC, (100), comprising:
a plurality of processing circuits **(110(1)-110(K))** configured to initiate memory transactions (204);
a memory circuit (112) comprising a plurality of memory regions (220(1)-220(F));
a mesh interconnect (104) coupled to the plurality of processing circuits **(110(1)-110(K))** and the memory circuit (112); and
an access circuit (106) coupled to the mesh interconnect (104), the access circuit (106) configured to:
obtain, for a memory transaction (204) of the memory transactions (204):
an initiator identifier (206) identifying a processing circuit, of the plurality of processing circuits (110(1)-110(K)), that initiated the memory transaction (204),
a target memory address (208), and
a type, wherein the memory transaction (204) is directed to the memory circuit (112);
identify a memory region (220), of the plurality of memory regions (220(1)-220(F)), that includes the target memory address (208);
access permission information (218) for the identified memory region (220);
determine that the processing circuit is not authorized to perform the type with respect to the identified memory region (220) based on the permission information (218) for the identified memory region (220); and
in response to determining that the processing circuit is not authorized to perform the type with respect to the identified memory region (220), generate an authorization indication (234) indicating that the processing circuit is not authorized to perform the memory transaction (204).

2. The SoC of claim 1, wherein the access circuit is further configured to, for another memory transaction directed to the memory circuit and initiated by another processing circuit of the plurality of processing circuits:
obtain, for another memory transaction of the memory transactions:
another initiator identifier identifying another processing circuit, of the plurality of processing circuits, that initiated the other memory transaction,
another target memory address, and
another type, wherein the other memory transaction is directed to the memory circuit;
identify another memory region, of the plurality of memory regions, that includes the other target memory address;
access permission information for the other identified memory region;
determine that the other processing circuit is authorized to perform the other type with respect to the other identified memory region based on the permission information for the other identified memory region; and
in response to determining that the other processing circuit is authorized to perform the other type with respect to the other identified memory region, generate another authorization indication indicating that the other processing circuit is authorized to perform the other memory transaction.

3. The SoC of claim 1 or 2, wherein the access circuit is further configured to provide the authorization indication to the memory circuit, and wherein the memory circuit is configured to prevent execution of the memory transaction in response to the authorization indication.

4. The SoC of any preceding claim, further comprising:
a plurality of other memory circuits coupled to the mesh interconnect; and
a plurality of other access circuits, wherein each other access circuit is associated with a respective other memory circuit of the plurality of other memory circuits and is configured to control access by memory transactions directed to the respective other memory circuit.

5. The SoC of any preceding claim, wherein the type of the memory transaction includes at least one of a read type, a write type, or an execute type, and wherein the access circuit is configured to determine that the processing circuit is not authorized to perform the type with respect to the identified memory region based on the permission information for the identified memory region and the type of the memory transaction.

6. The SoC of any preceding claim, wherein the permission information for the identified memory region comprises set permissions and a set initiator vector, and wherein determining that the processing circuit is not authorized to perform the type with respect to the identified memory region is further based on the type with respect to the set permissions and the processing circuit with respect to the set initiator vector.

7. The SoC of claim 6, wherein the set initiator vector comprises a plurality of bits associated with processing circuits of the plurality of processing circuits, and wherein determining that the processing circuit is not authorized to perform the type with respect to the identified memory region is further based on a bit of the set initiator vector associated with the processing circuit.

8. The SoC of claim 7, wherein at least two processing circuits of the plurality of processing circuits are associated with a same bit of the set initiator vector.

9. The SoC of any preceding claim, wherein each memory region of the plurality of memory regions is identified by a region starting address and a region size, and wherein the access circuit is configured to identify the identified memory region by comparing the target memory address to the region starting address and the region size.

10. The SoC of claim 9, wherein the access circuit is configured to determine that the processing circuit is not authorized to perform the type with respect to the identified memory region in response to the region size of the identified memory region indicating zero.

11. A method, comprising:
obtaining, for a memory transaction (204) directed to a memory circuit (112) of a system-on-chip (100):
an initiator identifier (206) identifying a processing circuit, of a plurality of processing circuits (110(1)-110(K)), that initiated the memory transaction (204),
a target memory address (208), and
a type;
identifying a memory region (220) of a plurality of memory regions (220(1)-220(F)), the identified memory region (220) including the target memory address (208);
accessing permission information (218) for the identified memory region (220);
determining, based on the permission information (218) for the identified memory region (220), that the processing circuit is not authorized to perform the type with respect to the identified memory region (220); and
in response to determining that the processing circuit is not authorized to perform the type with respect to the identified memory region (220), generating an authorization indication (234) indicating that the processing circuit is not authorized to perform the memory transaction (204).

12. The method of claim 11, wherein each memory region of the plurality of memory regions is identified by a region starting address and a region size, and wherein identifying the identified memory region comprises comparing the target memory address to the region starting address and the region size.

13. The method of claim 11 or 12, wherein the permission information for the identified memory region comprises set permissions and a set initiator vector, and wherein determining that the processing circuit is not authorized to perform the type with respect to the identified memory region is further based on the type with respect to the set permissions and the processing circuit with respect to the set initiator vector.

14. An access circuit (106), comprising:
a control circuit (214) configured to:
obtain, for a memory transaction (204) directed to a memory circuit (112) of a system-on-chip (100):
an initiator identifier (206) identifying a processing circuit, of a plurality of processing circuits (110(1)-110(K)), that initiated the memory transaction (204),
a target memory address (208), and
a type; and
identify a memory region (220), of a plurality of memory regions (220(1)-220(F)), the identified memory region (220) including the target memory address (208); and
a lookup circuit (216) coupled to the control circuit (214), the lookup circuit (216) configured to access permission information (218) for the identified memory region (220),
wherein the control circuit (214) is further configured to:
determine, based on permission information (218) for the identified memory region (220), that the processing circuit is not authorized to perform the type with respect to the identified memory region (220); and
in response to determining that the processing circuit is not authorized to perform the type with respect to the identified memory region (220), generate an authorization indication (234) indicating that the processing circuit is not authorized to perform the memory transaction (204).

15. The access circuit of claim 14, wherein each memory region of the plurality of memory regions is identified by a region starting address and a region size, and wherein the control circuit is configured to identify the identified memory region by comparing the target memory address to the region starting address and the region size.
